# EUROPEAN PATENT APPLICATION

(11) **EP 4 768 197 A1**
(43) Date of publication of application: **01.07.2026**
(21) Application number: 24223437.5
(22) Date of filing: 27.12.2024
(51) Int. Cl.: B25J 9/16, B25J 15/00, B25J 15/06

(54) **GRIPPER ARRANGEMENT, METHOD AND COMPUTER-READABLE MEDIUM**

(71) Applicant: Tampere University Foundation sr, 33014 Tampere University (FI)
(72) Inventor: MARTINEZ LASTRA, Jose Luis, 33014 Tampere University (FI); VASUDEVAN, Saigopal, 33014 Tampere University (FI); MALVIDO FRESNILLO, Pablo, 33014 Tampere University (FI); LE, Dong Anh, 33014 Tampere University (FI)
(74) Representative: Papula Oy

(57) **Abstract**

A gripper arrangement (100), a method and a computer-readable medium. The arrangement comprises a suction gripper (1), comprising plurality of suction cups (2) arranged in a matrix-like order, and a control system (3) configured to detect the contour of the object (A) to be gripped, determine the centroid (C)of said object, define the positions (P) of the suction cups (2) around the centroid (C) of said object, determine a sub-set of suction cups of said plurality of suction cups (2) to be actuated for suction based on defined positions of the suction cups on the object and a predefined comparison task, guide the suction gripper (1) on the object (A) such that the suction cups (2) are on the defined positions (P), and actuate the suction cups (2) belonging to said sub-set of suction cups for suction.

## Description

This invention was developed with the financial support of the European Union under the Horizon Europe program, managed by the European Health and Digital Executive Agency (HaDEA), Grant Agreement No. 101092043.

### BACKGROUND

The invention relates to a gripper arrangement comprising plurality of suction cups.

The invention further relates to a method for gripping an object.

The invention still further relates to computer-readable medium.

Gripping and handling of Volumetric Deformable Objects (VDO), such as raw food, is difficult and susceptible to gripping fails.

### BRIEF DESCRIPTION

Viewed from a first aspect, there can be provided a gripper arrangement, comprising a suction gripper, comprising plurality of suction cups arranged in a matrix-like order, a control system configured to detect the contour of the object to be gripped, determine the centroid of said object, define the positions of the suction cups around the centroid of said object, determine a sub-set of suction cups of said plurality of suction cups to be actuated for suction based on defined positions of the suction cups on the object and a predefined comparison task, guide the suction gripper on the object such that the suction cups are on the defined positions, and actuate the suction cups belonging to said sub-set of suction cups for suction.

Thereby a gripper arrangement that handles VDOs reliably regardless of their position or shape may be achieved.

Viewed from a second aspect, there can be provided a method for gripping an object, the object being a Volumetric Deformable Object (VDO), the method comprising
- detecting the contour of the object to be gripped,
- determining the centroid of said object,
- defining the positions of plurality of suction cups around the centroid of said object, said suction cups arranged in a suction gripper in rows and lines,
- determining a sub-set of suction cups of said plurality of suction cups to be actuated for suction based on defined positions of the suction cups on the object and a predefined comparison task,
- guiding the suction gripper on the object such that the suction cups are on the defined positions, and
- actuating the suction cups belonging to said sub-set of suction cups to apply suction to the object.

Thereby a method that grips and moves VDOs reliably regardless of their position or shape may be achieved.

Viewed from a further aspect, there can be provided a computer-readable medium having stored therein instructions, that when executed by a computing system, cause the computing system to perform the method of the second aspect.

Thereby a computer-readable medium that controls gripping and moving of VDOs reliably regardless of their position or shape may be achieved.

The arrangement, the method and the computer-readable medium are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

The benefits of the arrangement and the method are especially clear in the food sector, where certain food products with unpredictable physical behavior necessitates to utilize manual labor to manipulate these products. The arrangement and the method may enable the automatization of this kind of manual sections of the production lines and remove humans from harsh working environments, such as cold, wet, humidity, etc. It is to be noted that other industries than food industries may utilize the claimed arrangement and the method as well.

The determination of the sub-set of suction cups to be actuated ahead of contacting the object with the suction cups allows the arrangement and the method to have more flexibility, which may result energy savings.

The arrangement is easy to calibrate and implement in a new environment due to its simplified control system. Unlike the known arrangements that may require multiple adjustments based on sensor feedback, the claimed arrangement can achieve correct positioning in a single attempt. This leads to faster setup time and reduced downtime costs. An AI system optionally integrated to or with the control system may increase the success rate of picking and manipulating tasks of the objects.

The claimed arrangement and the method may perform not only simple pick-and-place tasks but also multiple grasps, pick, drop, toss and flip possibilities. The outcome is a function of the suction cups arranged in a matrix-like configuration, the release sequence of the individual suction cups, the trajectory of the manipulator, and the time sequence of the release sequence of the suction cups.

The arrangement may handle unusually or irregularly shaped objects. The oblong shape of the suction cups and the uniaxial flexibility and cushioning effect offered by the level compensator provided preferably for each of the individual suction cups, allows the suction gripper to grasp objects having irregular shapes, viscoelasticity, wetness, deformability, etc. This is especially advantageous if the object is soft, deformable material, e.g., food, such as meat, poultry, fish, etc.

The design of the suction gripper and its ease of integration to a manipulator system (through I/Os) promotes modularity and easy integration.

The arrangement may have modular structure providing ease of replaceability of the individual elements that makes initial installation and maintenance easy.

Various embodiments of the first aspect may comprise at least one feature from the following paragraphs:
In one embodiment, the control system comprises a vision system configured to carry out a visual detection of the object to be gripped, and wherein the control system is configured to determine the centroid of the object and define the positions of the suction cups on the object based on said visual detection.

An advantage is that the gripper arrangement does not require touching the object for detecting its contour, which reduces risk of contamination of the object. Furthermore, the ability to handle unusually shaped deformable products, even the ability to handle viscoelastic and anisotropic volumetric deformable objects, may be improved.

In one embodiment, the control system is configured to determine the orientation of the object and define the positions of the suction cups according to said orientation of the object.

An advantage is that the suction gripper may be controlled to grasp the object such that the success rate of manipulation tasks to be carried out may be optimized.

In one embodiment, the arrangement comprises a plurality of valves corresponding to the plurality of suction cups, wherein the control system is configured to control suction of the suction cup by opening or closing the respective valve.

An advantage is that a simple and precise control of the suction gripper may be achieved.

In one embodiment, the predefined comparison task carried out by the control system includes comparison of the suction area of the suction cup with the area of the suction area intersecting with the object when the suction cup is in its defined position on said object, and wherein the control system is configured to select the suction cup to the sub-set of suction cups to be actuated if the area of the suction area intersecting with the object meets at least a set minimum proportion of the suction area.

An advantage is that the energy consumption of the arrangement may be reduced, since air leakages during gripping are minimized.

In one embodiment, the suction area of the suction cup has an oblong shape having a longitudinal axis.

An advantage is that the suction area, i.e., the gripping area, of the suction cup may be increased compared to round suction cups, which increases the success rate of gripping of especially VDO objects.

In one embodiment, all the suction cups in the suction gripper are positioned such that their longitudinal axes are at least essentially parallel.

In one embodiment, the control system is configured to define the positions of the suction cups such that the longitudinal axes of the suction cups are at least essentially parallel with the orientation of the object.

An advantage is that the ability to handle viscoelastic and anisotropic volumetric deformable objects may be improved.

In one embodiment, the suction cup comprises a perforated membrane arranged in the suction area.

An advantage is that the membrane may prevent small particles from entering the pneumatic system. Furthermore, the membrane may also prevent local deformations of a VDO object by distributing suction of the suction cup in large number of small suction points.

In one embodiment, the gripper arrangement comprises a manipulator system arranged for positioning the suction gripper on the object and moving the object with the suction gripper.

An advantage is that the use of the gripper arrangement may be diversified and optimized for various manipulation tasks.

In one embodiment, the method comprises sequentially releasing the object from the suction cups such that a manipulation task changing posture of the object is realized.

An advantage is that the position of the object may be changed while it is moved, which allows for a high degree of optimization and options how objects are gripped.

Based on the above mentioned, it should be noted that different embodiments mentioned in the above paragraphs may combine in any possible suitable manner for implementing the present invention.

### BRIEF DESCRIPTION OF FIGURES

Some embodiments illustrating the present disclosure are described in more detail in the attached drawings, in which
Figure 1 is a schematic side view of a gripper arrangement comprising a manipulator system,
Figure 2 is a schematic side view of another gripper arrangement comprising a manipulator system,
Figure 3 is a schematic view of a gripper arrangement,
Figure 4 is a schematic view of a detail of the gripper arrangement shown in Figure 3,
Figure 5 is a schematic view of a detail of a gripper arrangement,
Figure 6 illustrates a method for gripping an object,
Figures 7a and 7b illustrate steps of a method for gripping an object,
Figure 8 illustrates a step of a method for gripping an object, and
Figure 9 illustrates steps of a method for gripping an object.

In the figures, some embodiments are shown simplified for the sake of clarity. Similar parts are marked with the same reference numbers in the figures.

### DETAILED DESCRIPTION

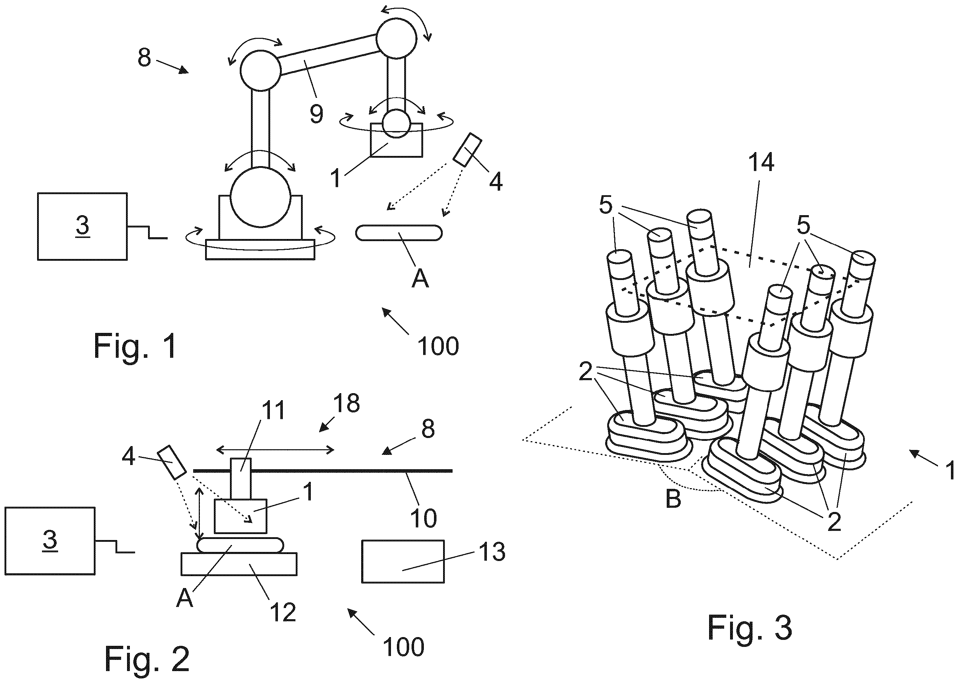

**Figure 1** is a schematic side view of a gripper arrangement comprising a manipulator system, and **Figure 2** is a schematic side view of another gripper arrangement comprising a manipulator system.

The manipulator system 8 is arranged for positioning a suction gripper 1 on an object A and moving the object with said suction gripper from one point to another point. The suction gripper 1 comprises plurality of suction cups 2 that are arranged in a matrix-like order.

In one embodiment, the object A is a Volumetric Deformable Object (VDO). In one embodiment, the VDO is an object of food industry, such as a product or semifinished food product. In one embodiment, the object A is of raw food, such as meat, fish or poultry.

The gripper arrangement 100 shown in Figure 1 comprises a robot 9. In one embodiment, the robot 9 may rotate and move linearly or non-linearly the suction gripper 1, such as shown by arrows in Figure 1.

The gripper arrangement 100 shown in Figure 2 comprises a manipulator 18. In one embodiment, the manipulator 18 is arranged at a conveyor 12 that is arranged to move objects A. In one embodiment, the manipulator 18 comprises a holder 11 in which the suction gripper 1 is attached. The holder 11 and the suction gripper 1 attached thereto can move along a guide 10 and, e.g., move objects from the conveyor to a package 13. It is to be noted, however, that in some embodiments the holder 11 is not moving along any guide but is fixed.

In one embodiment, the gripper arrangement 100 comprises just one suction gripper 1. In another embodiment, the gripper arrangement 100 comprises two or more suction grippers 1. In one embodiment, said two or more suction grippers 1 are configured to move plurality of objects A simultaneously and with identical movements. In another embodiment, at least one of said two or more suction grippers 1 moves objects A with movements and/or timing that differ from movements and/or timing of another suction gripper of said two or more suction grippers 1.

A control system 3 is configured to control the work of the gripper arrangement 100. The control system 3 comprises means for detecting the contour of the object A to be gripped. In one embodiment, the means for detecting the contour of the object is a vision system 4. The vision system 4 is configured to carry out a visual detection of the object A and thereby detect the contour of the object A. In one embodiment, the vision system 4 detects the object based on color difference.

The control system 3 determines the position of the centroid of the object A so that the positions of the suction cups 2 on the object A can be defined. In one embodiment, the vision system 4 comprises a 2D camera and the position of the centroid is defined based on data representing the contours of the object A. In one embodiment, this data is generated by using color filter segmentation.

In one embodiment, the vision system 4 comprises a 3D camera or stereo camera that produces data not only about the contours of the object but also about the depth or thickness of the object. This data is used in determining the position of the centroid of the object A.

In one embodiment, multiple cameras are arranged in positions from which the depth or thickness of the object is detected, and the position of the centroid of the object A is determined based on data generated by said multiple cameras.

In one embodiment, the means for detecting the contour and the centroid of the object comprises tactile sensors.

In one embodiment, the means for detecting the contour and the centroid of the object comprises an ultrasonic sensor.

In one embodiment, the means for detecting the contour and the centroid of the object comprises a LIDAR (light detection and ranging) system.

In one embodiment, the means for detecting the contour and the centroid of the object comprises a 3D laser scanner.

In one embodiment, the gripper arrangement 100 comprises further sensors, such as temperature or pressure sensors, etc., that are connected to the control system 3. Information gained by the further sensors may be utilized in controlling of the suction gripper 1 and the suction cups thereof.

The control system 3 is arranged to define the positions of the suction cups 2 around the centroid of the object A. Then, the control system 3 is arranged to determine or select a sub-set of the suction cups 2 to be actuated for suction, i.e., those suction cups through which air is sucked. The suction cups not belonging to the sub-set, if any, will not be actuated for suction. This determination of the sub-set of the suction cups is based on the defined positions of the suction cups 2 on the object and a predefined comparison task. Said predefined comparison task is described in more detail later in this description.

The control system 3 is arranged to guide the suction gripper 1 on the object A such that the suction cups 2 are on the defined positions on the surface of the object A. In practice this means that the manipulator system 8 is controlled such that the suction cups 2 are positioned on the defined positions. Then the control system 3 is arranged to actuate those suction cups 2 that belong to the sub-set of suction cups for suction. In practice this means that air valves (such as valves shown in Figure 3) corresponding to the sub-set of suction cups are opened so that a pump (not shown) is able to suck air therethrough.

The control system 3 may comprise a computer, computation unit or device comprising at least one processor and a memory. Instructions, i.e. a computer program, stored to a computer-readable medium, preferably a non-transitory computer-readable medium, when executed by a computing system of the control system cause the computing system to perform the tasks of the control system.

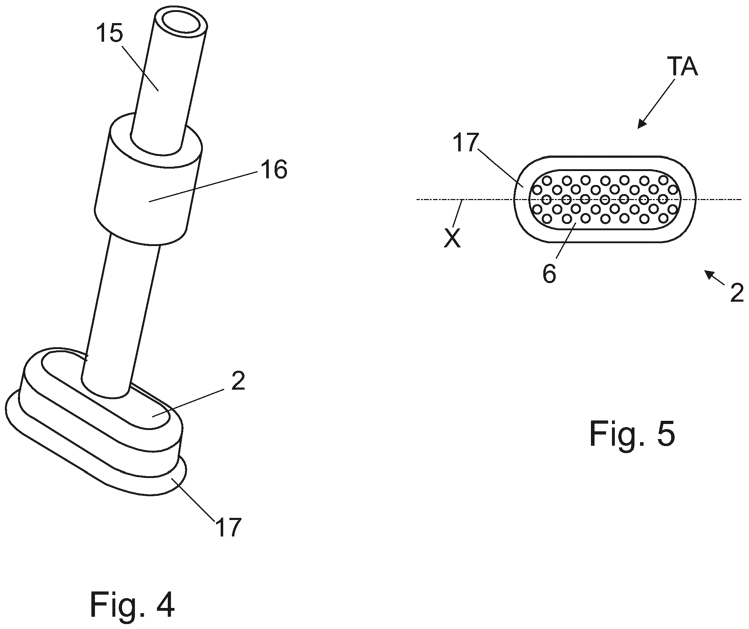

**Figure 3** is a schematic view of a gripper arrangement, and **Figure 4** is a schematic view of a detail of the gripper arrangement shown in Figure 3, and **Figure 5** is a schematic view of a detail of a suction cup.

In one embodiment, the suction cups 2 are arranged in rows and lines. In embodiments shown in this description, the suction gripper 1 has suction cups arranged in 3x2 matrix. It is to be noted, however, that other numbers of rows and lines are possible, too.

In one embodiment, all the suction cups 2 or their suction areas are arranged in the same plane. In another embodiment, such as shown in Figure 3, the suction cups 2 are arranged in two planes that are at an angle B.

In one embodiment, the suction gripper 1 has a modular structure so that the number of the suction cups 2 included therein can be easily increased or decreased.

Each one of the suction cups 2 is preferably individually controlled, i.e., whether one of them is activated for suction or not does not depend on the activation of another suction cup. Therefore, each of the suction cups 2 is connected through a corresponding valve 5 to a pneumatic source, such as a pump (not shown). The control system 3 is arranged to control suction of the suction cup(s) by opening or closing the respective valve(s) 5.

In one embodiment, the suction area TA of the suction cup has an oblong shape that has a longitudinal axis X. In one embodiment, such as shown in Figure 5, said oblong shape has two straight parallel sides and rounded ends. However, in one embodiment, the suction cup 2 is round.

The suction gripper 1 comprises a frame 14 (shown by dashed lines in Figure 3) that provides attachment for the suction cups 2 and the manipulator system 8.

In one embodiment, all the oblong shaped suction cups 2 are positioned such that their longitudinal axes X are parallel or at least substantially parallel. It is to be noted, however, that in other embodiments it may be advantageous to position said longitudinal axes X differently.

It is to be noted that the design of the suction area TA as well as its size may vary depending on, e.g., shape, dimensions, surface structure, weight or other physical properties of the object A.

In one embodiment, such as shown in Figures, all the suction cups 2 arranged in the suction gripper 1 have same size and shape. However, this is not always the case. In other words, the suction gripper 1 may have suction cups that have different shapes and/or sizes.

In one embodiment, the suction cup 2 is fixed in relation to the frame 14 inflexibly. In an embodiment, the suction cup 2 may adapt to the surface of the object A by its soft adaptable edge 17.

In one embodiment, the suction cup 2 is fixed in relation to the frame 14 flexibly. In one embodiment, there is a level compensator 16 arranged to, e.g., a suction pipe 15 that connects the suction cup to a pneumatic system. The level compensator 16 provides some dampening and allows the suction cup 2 to move at least in a direction that is normal to the plane of the suction area TA. Thus, the impact of the suction cup on soft objects, such as VDOs, may be reduced. Furthermore, the suction cup may get an optimal position in relation to the object.

In one embodiment, the suction cup 2 may rotate at least to some extent in relation to the frame 14. For instance, the suction cup 2 may be attached rotatable to the suction pipe 15. Then, the longitudinal axis X of oblong shaped suction cup may rotate in relation to the frame 14. Thus, the suction cup may get an optimal position in relation to the object A.

The shown embodiment of the suction gripper 1 is designed for gripping one object. In another embodiment, the suction gripper 1 is designed for gripping simultaneously two or even more objects.

In one embodiment, the suction cup 2 is provided with a perforated membrane 6 that is arranged in the suction area TA. The membrane 6 may protect the pneumatic system. The membrane 6 may also protect the object A from local deformations. In one embodiment, the membrane 6 is made of the same material as the rest of the suction cup. In one embodiment, the membrane 6 is an integral or homogenous part with the rest of the suction cup. In one embodiment, the material is silicone.

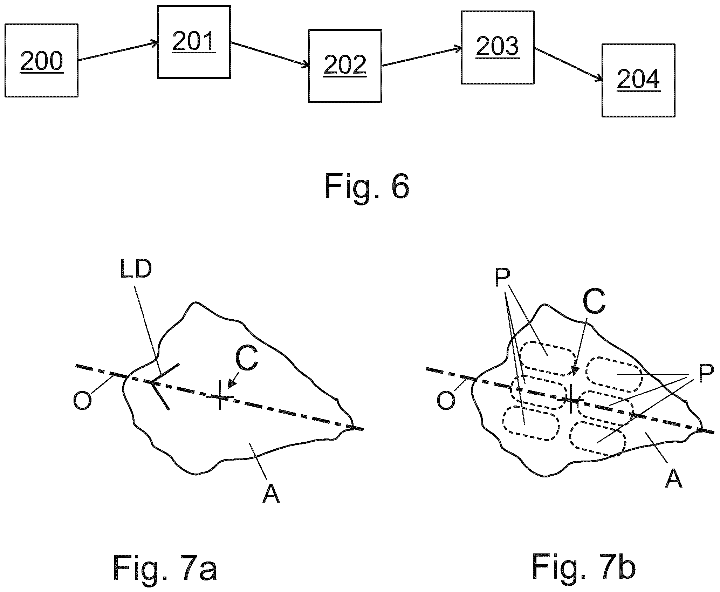

**Figure 6** illustrates a method for gripping an object that is a Volumetric Deformable Object (VDO).

First in the method it is detected 200 the object to be gripped. Data about the object's contour and placement of its centroid are defined by means described in this description. In one embodiment, also the orientation of the object is determined. For example, in case the object is a chicken breast, the determination whether the chicken breast is a left-side or right-side chicken breast may specify the manipulation tasks to be performed to the chicken breast. Based on the data of the object, the control system defines 201 the positions of plurality of suction cups of a suction gripper around the centroid. In one embodiment, the control system comprises a vision system, and the positions of plurality of suction cups is defined by projecting the suction cups on the object.

Then, it is determined 202 a sub-set of suction cups of the plurality of suction cups that will be actuated for suction based on defined positions of the suction cups on the object and a predefined comparison task.

Next, the suction gripper is guided 203 on the object such that the suction cups are on the defined positions defined in step 201, and the suction cups belonging to said sub-set of suction cups defined in step 202 are actuated to apply suction to the object. In one embodiment, the suction gripper is positioned on the object by a manipulator system controlled by the control system.

Next, motion of the suction gripper and suction of the sub-set of suction cups are controlled such that desired manipulation tasks directed to the object are realized.

**Figures 7a and 7b** illustrate steps of a method for gripping an object. In one embodiment, the control system 3 is configured to determine the orientation O of the object. In one embodiment, the orientation O is the longest dimension of the object intersecting the centroid C and detected by the control system. Then the control system 3 takes the orientation into account when defining the positions of the suction cups 2 on the object A.

In one embodiment, the control system 3 is configured to determine the orientation O and a longitudinal direction LD of the object. In one embodiment, the longitudinal direction LD represents the direction where the thickness or mass of the object A increases most.

In one embodiment, said positions are defined such that there are equal numbers of suction cups on both sides of the orientation. In one embodiment, where the suction cups 2 have an oblong shape, the positions of the suction cups 2 are defined such that the longitudinal axes X of the suction cups have certain directions in relation to the orientation O. In one embodiment, the longitudinal axes X of the suction cups are at least essentially parallel with the orientation O.

Figure 7b is showing an example of how the positions of the suction cups 2 can be defined on the object A. The object A shown herein may be, e.g., a chicken breast and the suction gripper 1 comprises six suction cups arranged in two lines. The centroid C and the orientation O of the object have been defined as described in this description. The positions P of the suction cups around the centroid are masked on the surface of the object A by the control system. The control system is configured to position the suction cups so that manipulation tasks of the object A and carried out by the suction gripper are realizable.

In one embodiment, the suction cups are positioned such that as much as possible of combined suction area of the suction cups lies on the object.

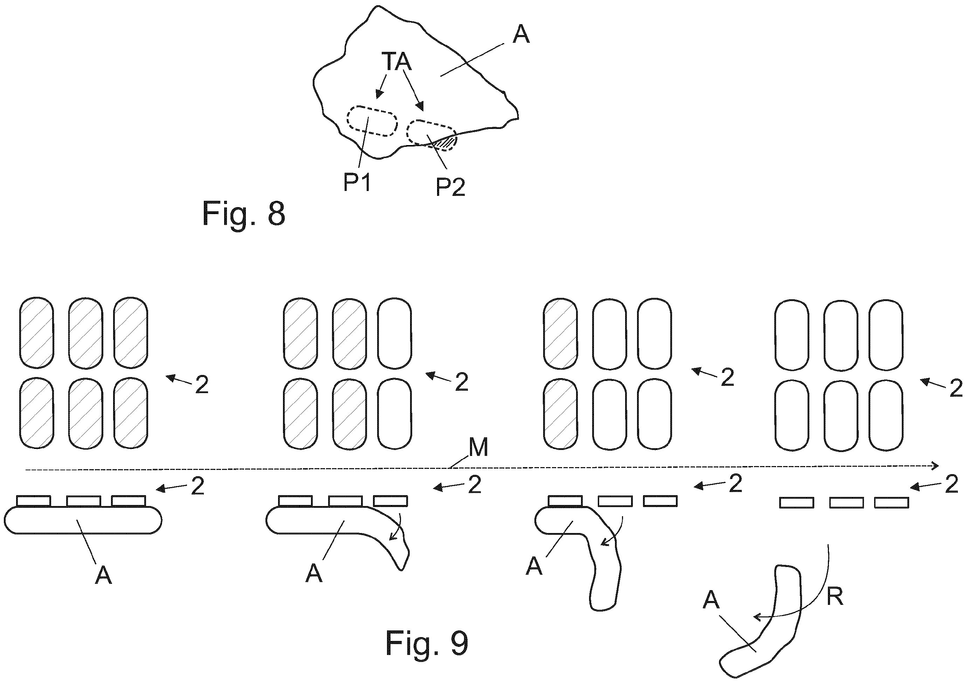

**Figure 8** illustrates a step of a method for gripping an object. It should be noted that positions of only two suction cups have been shown for sake of clarity.

In one embodiment, the predefined comparison task realized by the control system includes comparison of the suction area TA of the suction cup with the area of the suction area intersecting with the object A when the suction cup is in its defined position on said object, prior to contacting the suction cup with the object A.

In one embodiment, the predefined comparison task includes comparison of the suction area TA intersecting with the object to the area (i.e. total area) of said suction area. If the intersecting area meets a set minimum proportion of the total suction area, the suction cup to be arranged to the position under consideration will be activated to suction. In other words, said suction cup is selected to the sub-set of suction cups to be actuated for suction.

In Figure 8 it is shown a first masked position P1 and a second masked position P2 representing intended positions of two suction cups. In the first position P1 the suction area TA completely intersects with the object A. In other words, 100 % of the area of the first position P1 intersects with the object. Thus, the suction cup to be arranged to the first position P1 is able to create suction to the object without leakage and said suction cup is selected to the sub-set of suction cups to be actuated for suction.

In the second position P2 the suction area TA only partly intersects with the object A. In other words, some area of the second position P2 does not intersect with the object. This area is shown by diagonal hatching in Figure 8. Now, if the intersecting area of the second position P2 meets the set minimum proportion of the total suction area, the suction cup to be arranged to the second position P2 will be activated to suction. In other words, if the intersecting area of the second position P2 does not meet said set minimum proportion, i.e., is less than the minimum portion, the suction cup to be arranged to the second position P2 will not be selected to the sub-set of suction cups to be actuated for suction. This means that said suction cup is inactive since it is not opened to the pneumatic system.

The set minimum proportion is a parameter that is specific to, e.g., the nature of the object A being picked up, such as its material, dimensions, elasticity, temperature, etc. In one embodiment, the set minimum proportion of the total suction area is 90 %, i.e., if 90 % or more of the area of the position P intersects with the object, the suction cup to be arranged to said position P is selected to the sub-set of suction cups to be actuated for suction. It is to be repeated that the set minimum proportion may vary. In one embodiment, the set minimum proportion of the total suction area is selected in range of 70 % to 100 %, preferably 80 % to 95 %, more preferably 85 % to 90 %.

In one embodiment, an artificial intelligence system (AI) is integrated into or with the control system for increasing the success rate of picking and desired manipulation tasks directed to the object.

**Figure 9** illustrates steps of a method for gripping an object. In one embodiment, each individual suction cup 2 of the suction gripper can be controlled individually. This means that the control system 3 can activate or deactivate each suction cup 2 independently, either simultaneously or sequentially. Simultaneous deactivation of all the suction cups 2 releases the object A from the suction gripper immediately. Sequential deactivation makes it possible to realize various manipulation tasks that may, e.g. changing posture of the object A.

Figure 9 is showing one alternative of sequential deactivation. The suction gripper shown herein has six suction cups 2. The suction gripper and the suction cups 2 thereof moves from left to right as shown by an arrow M.

At first all six suction cups 2 are activated and gripped to the object A. The activated suction cups 2 are shown as filled with diagonal lines.

As the suction gripper moves right, a pair of suction cups 2 (shown without diagonal lines) on right edge of the suction gripper are deactivated, i.e., their connections to the pneumatic system are closed by, e.g., respective valves. As a result, right edge of the object A come loose from the suction gripper. The suction gripper continues its movement to right, a part of the object A hanging loose due do gravity.

Next, a pair of suction cups 2 in the middle part of the suction gripper are deactivated. As a result, over half of the object A drops to hang loose. Now the suction gripper is gripping to the object A only with pair of suction cups 2 on left edge of the suction gripper.

Finally, the last gripping pair of suction cups 2 is deactivated and the object A released from the suction gripper. The sequential deactivation combined with the movement M of the suction gripper makes the object to change its posture by a rotational movement shown by an arrow R. This way the object A will drop on an underlying plane (not shown) upside down compared to its posture when attached to the suction gripper.

It is clear that the sequential deactivation described above is just one alternative or option of various manipulation tasks that can be realized with the suction gripper shown in Figure 9, not to mention suction grippers that comprise different number of suction cups.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application. The drawings and the related description are only intended to illustrate the idea of the invention. It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature (s) or act(s) followed thereafter, without excluding the presence of one or more additional features or acts.

### REFERENCE SYMBOLS

- 1: suction gripper
- 2: suction cup
- 3: control system
- 4: vision system
- 5: valve
- 6: perforated membrane
- 7: suction area
- 8: manipulator system
- 9: robot
- 10: guide
- 11: holder
- 12: conveyor
- 13: package
- 14: frame
- 15: suction pipe
- 16: level compensator
- 17: edge
- 18: manipulator

- 100: gripper arrangement
- 200-: method steps

- A: object
- B: angle
- C: centroid
- LD: longitudinal direction
- IA: intersecting area
- M: movement
- O: orientation
- P: position
- R: rotational movement
- TA: suction area
- X: longitudinal axis

## Claims

1. A gripper arrangement (100), comprising
- a suction gripper (1), comprising
- plurality of suction cups (2) arranged in a matrix-like order,
- a control system (3) configured to
- detect the contour of the object (A) to be gripped,
- determine the centroid (C)of said object,
- define the positions (P) of the suction cups (2) around the centroid (C) of said object,
- determine a sub-set of suction cups of said plurality of suction cups (2) to be actuated for suction based on defined positions of the suction cups on the object and a predefined comparison task,
- guide the suction gripper (1) on the object (A) such that the suction cups (2) are on the defined positions (P), and
- actuate the suction cups (2) belonging to said sub-set of suction cups for suction.

2. The arrangement as claimed in claim 1, wherein
- the control system (3) comprises a vision system (4) configured to
- carry out a visual detection of the object to be gripped, and wherein
- the control system (3) is configured to determine the centroid (C) of the object and define the positions (P) of the suction cups (2) on the object (A) based on said visual detection.

3. The arrangement as claimed in any one of the preceding claims, wherein the control system (3) is configured to
- determine the orientation (O) of the object, and
- define the positions (P) of the suction cups according to said orientation of the object.

4. The arrangement as claimed in any one of the preceding claims, comprising
- a plurality of valves (5) corresponding to the plurality of suction cups (2), wherein
- the control system (3) is configured to control suction of the suction cup (2) by opening or closing the respective valve (5).

5. The arrangement as claimed in any one of the preceding claims, wherein the predefined comparison task includes
- comparison of the suction area (TA) of the suction cup with the area of the suction area intersecting with the object (IA) when the suction cup (2) is in its defined position (P) on said object, and wherein the control system (3) is configured to
- select the suction cup (2) to the sub-set of suction cups to be actuated if the area of the suction area intersecting with the object meets at least a set minimum proportion of the suction area.

6. The arrangement as claimed in any one of the preceding claims, wherein
- the suction area (7) of the suction cup has an oblong shape having a longitudinal axis (X).

7. The arrangement as claimed in claim 6, wherein
- all the suction cups (2) in the suction gripper (1) are positioned such that their longitudinal axes (X) are at least essentially parallel.

8. The arrangement as claimed in claim 3 and comprising the suction cup of claim 7, wherein
- the control system is configured to define the positions (P) of the suction cups such that the longitudinal axes (X) of the suction cups are at least essentially parallel with the orientation (O) of the object.

9. The arrangement as claimed in any one of the preceding claims, wherein
- the suction cup (2) comprises a perforated membrane (6) arranged in the suction area (7).

10. The arrangement as claimed in any one of the preceding claims, comprising
- a manipulator system (8) arranged for positioning the suction gripper () on the object and moving the object with the suction gripper.

11. A method for gripping an object, the object being a Volumetric Deformable Object (VDO), the method comprising
- detecting the contour of the object (A) to be gripped,
- determining the centroid of said object,
- defining the positions of plurality of suction cups (2) around the centroid of said object, said suction cups arranged in a suction gripper (1) in rows and lines,
- determining a sub-set of suction cups of said plurality of suction cups (2) to be actuated for suction based on defined positions of the suction cups on the object and a predefined comparison task,
- guiding the suction gripper on the object such that the suction cups are on the defined positions, and
- actuating the suction cups belonging to said sub-set of suction cups to apply suction to the object.

12. The method as claimed in claim 11, comprising
- detecting the contour of the object (A) and determining the centroid of said object by a vision system (4).

13. The method as claimed in claim 11 or 12, comprising
- positioning the suction gripper (1) on the object by a manipulator system (8), and
- moving the object with the manipulator system (8).

14. The method as claimed in any one of claims 11-13, comprising
- sequentially releasing the object (A) from the suction cups (2) such that a manipulation task changing posture of the object is realized.

15. A computer-readable medium having stored therein instructions, that when executed by a computing system, cause the computing system to perform any of the methods of claims 11 to 14.
